Europäisches Patentamt

**European Patent Office**

Office européen des brevets

(11) Publication number: **0 215 682**
**A2**

# (12) EUROPEAN PATENT APPLICATION

(21) Application number: **86307200.5**

(22) Date of filing: **18.09.86**

(51) Int. Cl.⁴: **A 24 B 15/16**

(30) Priority: **19.09.85 US 777614   12.09.86 US 907402**

(43) Date of publication of application:
**25.03.87  Bulletin  87/13**

(84) Designated Contracting States:
**AT  BE  CH  DE  FR  GB  IT  LI  LU  NL  SE**

(71) Applicant: **Better Life International, Inc**
**2421 S.E. Dixie Highway**
**Stuart FL 33494 (US)**

(72) Inventor: **Summers, John K.**
**Rural Route 11, Box 49**
**Anderson, IN 46011 (US)**

(74) Representative: **Lawrence, Peter Robin Broughton et al**
**GILL JENNINGS & EVERY 53-64 Chancery Lane**
**London WC2A 1HN (GB)**

(54) Herbal chew and snuff compositions.

(57) Compositions and methods for providing tobaccoless herbal chew and snuff products which include an herbal component capable of being encased with a casing material providing a coherent cud in the oral cavity during use. In particular the present invention contemplates the use of a nicotine-free herbal substitute, such as red clover in the case of snuff and dandelion leaf in the case of chew, which can be encased with, among other things, a binder to provide a coherent cud in the mouth during use. As a result of this invention, safe nicotine-free snuff and chew compositions can be provided.

EP 0 215 682 A2

**Description**

Herbal Chew and Snuff Compositions

The present invention relates to stimulated tobacco snuff and chew compositions which can be made from known herbs and combinations thereof, which, in their use, proximate the texture, taste, and organoleptic sensation of a snuff or a chew composition.

The Surgeon General of the United States has determined tobacco as dangerous to physical health. Accordingly, the tobacco industry has made diligent efforts to minimise the danger of tobacco use by minimising the amount of harmful nicotine contained the tobacco.

Merely decreasing the amount of nicotine, however, has generally been recognised as inadequate as evidence by the disclosure of U.S. Patent Nos.2,930,720 and 3,007,068, both to Finberg, which are directed to smoking and snuff compositions which are substantially nicotine-free. Both of these disclosures include as essential components non-tobacco leaves, namely papaya leaves.

Other patents relating to the nicotine problem include U.S. Patent Nos.3,112,754 and 3,323,524, as well as British Patent No.842 granted in 1766. Further patents disclosing certain features of interest are U.S. Patent Nos.160,138 and 3,112,754, as well as British Patent No.2427 granted in 1859.

More particularly, in recent times it has also been found that chewing tobacco and/or nicotine-containing substances can have a further more serious effect, such as cancer of the mouth.

It is an object of the present invention to provide an alternative snuff composition and an alternative chew composition which can be made without a nicotine-containing substance such as tobacco, yet retain the consistency, taste and the organoleptic qualities of a tobacco composition.

It is another object of the invention to provide chew and snuff compositions free of artificial chemicals, while at the sme time exhibiting the same texture, taste, bite and lift as fine-quality tobacco snuff and chew products.

In the present invention, compositions and method has been provided for a safe, nicotine-free chewing and snuff products including a herbal component capable of being encased and also capable of being processed to a texture which is non-injurious to the surface of the oral cavity. The invention also includes a casing material for combining with the herb so that it maintains it in a moist coherent cud in the oral cavity during use. Usually, the herb is hydrophilic whereas the casing is absorptive to the herb so that it can be readily combined therewith.

The compositions described herein and made by the described methods can be in the form of those materials that are described in U.S.A. as being snuffs, and thus can, for instance, be in the form of small pieces that can be pressed together and put into the mouth as a cud. Alternatively the compositions can be chewing compositions and thus can be, for instance, elongated pieces that will form a cud when wetted in the mouth. For instance the elongated pieces can be strands or ribbons that may be similar to, but are often broader than, conventional loose cigarette or pipe tobacco. The compositions can, in appearance, be similar to the known U.S.A. forms of chewing or snuff tobacco and which are, for example, described in the literature. Often each strand or other piece comprises herb material coated and impregnated with the casing material.

Throughout this specification various amounts are quoted as percentages. In those instances where the percentages do not add up to 100% it should be understood that other ingredients will normally be present in an amount to give 100% although such ingredients are optional and, if absent, the named components may be used in parts by weight that are numerically the same as the percentage figures that are quoted.

In the case of a chewing composition, the herb can be selected from a group consisting of dandelion, papaya, dock or sorrel, sunflower, calendula, nasturtium, mallow, chicory, corn silk and mixture thereof. In the case of snuff composition, the above herbs can be used, and in addition clover can be used, red clover being the present preferred major component of the snuff composition. In the case of the chew composition, it has been found that a combination of dandelion and dock or sorrel provides an especially good product.

The casing material which is combined with the herbal component in both the chew composition and the snuff composition, should preferably contain a preservative, a binder, and a humectant.

The preservative is used to insure that the product is not contaminated, and can include an ingredient, such as salt, and herbal ingredients, such as powdered dandelion root, echinacea, clove powder and mixtures thereof.

The binder component is generally used to provide coherency, and can be selected from the group consisting of molasses, corn syrup, hydrogenated starch hydrolysates and mixtures thereof. A typical starch hydrolysate is Lycasin (a trademark of Roquette Corp.). The humectant component which is used to maintain moistness of the composition, can include ingredients such as glycerine, sorbitol, invert sugar and other moisture-maintaining materials.

In order to enhance the consumer acceptability of the product, both the chewing and the snuff compositions can include a flavor component, which can be selected from the group consisting of natural and artificial sweeteners, flavoring agents, fruit flavors, spices, and mixtures thereof.

When the present invention is applied to provide a chewing composition including flavoring and coloring, it is contemplated that the herb component is present in the composition of the final product in an amount of from about 40% to about 60% by weight, preferably from about 45% to 55% by weight, whereas the casing component can be present in an amount of from about 8 to about 35% by weight, and is preferably present in an amount of from about 15 to 28% by weight. In this chewing composition, the flavor component can be present in an amount of from about 4 to about 26% by weight, and is preferably from about 8 to about 20% by weight, while the color component can be present in an amount of from about 0.25 to about 5% by weight, and is preferably present in an amount of from about 0.8 to about 3% by weight.

In the case of a snuff composition, the herb component is present in a final product in an amount of from about 25% to about 45% by weight, preferably from about 30% to about 40% by weight, and most preferably in an amount of from about 32% to about 37% by weight, and the casing component is present in an amount of from about 35% to 60% by weight, preferably from about 40% to about 60% by weight, and most preferably from about 45% to about 55% by weight.

Furthermore, the snuff composition can also have a flavorant component, a color component, and an additional non-casing herbal binder component which can, for example, have an ingredient such as gums, slippery elm, mallow, and mixtures thereof. When the additional components are included in the snuff, the flavor component is present in an amount of from about 0.25% to about 7%, preferably from about 1.2% to about 5%, and most preferably from about 2.5% to about 4% by weight, while the color component is present in an amount of from about 0.25% to about 5% by weight, preferably from about 0.8% to about 3% by weight, and preferably from about 1.0% to about 1.8% by weight. Finally, the additional binder component can be present in an amount of from about 0.5% to about 5% by weight, preferably from about 0.8% to about 3% by weight, and most preferably from about 0.1% to about 2% by weight.

Moreover, when preparing the compositions of the present invention, there can also be included a bio-effecting agent. These bio-effecting agents can be almost any agent which is compatible with the particular composition and which can be delivered by a suitable carrier.

The present invention also includes method for preparations of both the chewing composition and the snuff composition. In particular, it has been found that the chewing composition can be made by providing a substantially leafy herbal medium, moisturizing the herbal medium with the casing material, steaming the encased herbal medium and then dehydrating by, for example, drying by one form or another, preferably until the moisture level is from about 15 to 26%, eg, 19 to 21%. Furthermore, it is preferred that in preparation of the chewing composition the moistened steam product be aged to darken it to the appropriate color, and to add flavoring by additional steps included within the process. Furthermore, the chewing composition can also be cut to a desired consistency, which, in the case of the use of dandelion in combination with dock or sorrel, has been found to be about 2 inches in length.

In the case of snuff composition it has been found useful to provide a herbal medium and a texture which is sufficient to provide the snuff consistency and admixing the casing material in order to encase the herbal medium. In order to facilitate this process, it has been found extremely useful to provide a distributor agent and to premix dry material with the distributor agent before subsequently admixing to the herbal medium. In the case of using red clover, a preferred embodiment of the snuff composition, a suitable distributor has been found to be red clover powder which is premixed with the dry material prior to the subsequent mixing step with the herbal medium.

As a result of the present invention, it is possible to provide a biologically safe, attractive. and organoleptically pleasing product as a tobaccoless, nicotine-free, chew or snuff composition.

Furthermore, it has also been found that as a result of the present invention not only are the detrimental effects of a nicotine-containing product overcome, but physiologically beneficial side effects are a direct result of the use of the new compositions.

For a better understanding of the present invention together with other and further objects. reference is made to the following description, and the scope of the invention will be pointed out in the appended claims.

The present invention includes a tobaccoless, nicotine-free, herbal chewing composition which is capable of forming a coherent cud in the oral cavity during chewing. In the case of the chewing composition, the range of components of the present invention are shown in the following table.

## TABLE I

### GENERAL FORMULA FOR CHEWING COMPOSITION

| Ingredient | % By Weight of Final Product |
|---|---|
| Nicotine-free Leafy Herb | 40 to 60 |
| Casing Material for Maintaining Herb in Coherent Cud | 8 to 50 |

When the chewing composition also includes addition components such as flavorant and coloring to provide an attractive appearance and enhance the organoleptic acceptability of the product, the preferred general formula is shown below in Table II, and the most preferred formula is shown in Table III.

## TABLE II

### PREFERRED GENERAL FORMULA FOR CHEWING COMPOSITION

| Ingredient | % By Weight |
|---|---|
| Nicotine-free leafy herb | 40.00 to 60.0 |
| Casing material for maintaining herb in coherent cud | 8.00 to 35.0 |
| Flavor component | 4.00 to 26.0 |
| Color component | 0.25 to 5.0 |

## TABLE III

### MOST PREFERRED GENERAL FORMULA FOR CHEWING COMPOSITION

| Ingredient | % By Weight |
|---|---|
| Nicotine-free leafy herb | 45.00 to 55.0 |
| Casing material for maintaining herb in coherent cud | 15.00 to 28.0 |
| Flavor component | 8.00 to 20.0 |
| Color component | 0.80 to 3.0 |

The casing material, in turn, should include those components which provide a moist coherent cud in the mouth during chewing. It has been found that a suitable casing component can be provided by use of three major functional components, a preservative, a binder and a humectant. The preservative can be one or more components which can include a salt, powdered dandelion root, echinacea, clove powder and mixtures thereof. The binder material can include molasses, corn syrup, hydrogenated starch hydrolysates, and mixtures thereof. The humectant can be selected from one of glycerine, sorbitol, invert sugars, and other moisture-maintaining materials.

EXAMPLE 1

A chew formula was prepared using the following formula:

## TABLE IV

### CHEW FORMULA FOR EXAMPLE 1

| Ingredient | Weight in Grams | % By Weight |
|---|---|---|
| Herbal Component | | |
| Dandelion leaves | 235 | 62.6 |
| Casing Component | | |
| Sea Salt Powder | 25 | 6.6 |
| Glycerine | 10 | 2.7 |
| Water | 80 | 21.3 |
| Molasses | 15 | 4.0 |
| Colorant | | |
| Caramel Darkener | 10 | 2.7 |
| Flavorant | | |
| Jamaican Ginger Powder | 0.5 | 0.1 |
| | | 100.0 |

Using the above formula, the molasses, water, salt and caramel darkener are premixed, and then added to the dandelion leaves by moistening the leaves evenly with a mist provided in a tumble blender. The moistened leaves are then steamed for about 5 to 8 minutes under atmospheric pressure until the moisture content is from about 22% to about 30%. At this point in the procedure, the steamed leaves can be cut to a desired size, such as about two inches in length in the case of dandelion leaves by use of an appropriate cutting machine.

The moistened and steamed leaves were then bulked to darken the leaves to the desired texture. The leaves were bulked overnight, but can be bulked for one to three days in containers, such as plastic bags, in order to attain the appropriate darkness. Bulking involves storing a mixture of the herbal material and the casing material to permit absorption of the casing material and to permit ageing.

As previously indicated, the leaves can then be further flavored, and, in the present example, were flavored by dipping the leaves into a heated flavoring composition of choice at a temperature of about 140 F for approximately three minutes, followed by wringing the leaves out to a moisture content of 33% to 35%. The leaves were again bulked by holding in containers for about one day.

A further flavoring step was performed by sprinkling a powder flavorant over the leaves at a rate of 25 grams per pound of encased leaves. This was performed in a tumble blender so that the powder flavorant could be spread evenly over the leaves. The leaves were again bulked for about one day before the next step. The encased leaves were then dehydrated by drying in a tumble dryer at about 145°F. until a moisture content of 19 to 21% was attained. Then, additional aromatics, in combination with caramel coloring was sprayed on the leaves during the tumble drying at a rate of 27 grams of flavoring and 5 grams of darkener for each 480 grams of encased leaves, until a moisture content of 19 to 21% was again attained.

The product resulting from the above procedure was an attractive, fluffed, leafy aromatic product. Referring to the above procedure, it is also contemplated that the cutting operation can take place at any time after or during the flavoring procedure.

Turning now to the snuff composition of the present invention, it is contemplated that a suitable composition can be prepared in accordance with the following formula:

0 215 682

TABLE V

| Ingredient | % By Weight |
|---|---|
| Nicotine-free herbal component | 25 to 45 |
| Casing Component | 35 to 65 |

A preferred formula for the snuff composition can be prepared in accordance with the ranges shown in Table VI.

TABLE VI

| Ingredient | % By Weight |
|---|---|
| Nicotine-free herbal component | 30 to 40 |
| Casing component | 40 to 60 |

Furthermore, the most preferred embodiment of the snuff composition can be prepared in accordance with the following general formula:

MOST PREFERRED HERBAL SNUFF COMPOSITION

| Ingredient | % By Weight |
|---|---|
| Nicotine-free herbal component | 32 TO 37 |
| Casing component | 45 to 55 |

The snuff composition can also include, as in the case of the chewing composition, a flavorant component, a color component, and an additional non-casing herbal binder component. When these additional components are used they can be provided in the following percentages.

| Ingredient | General % By Weight | Preferred % By Weight | Most Preferred % By Weight |
|---|---|---|---|
| Flavor component | 0.25 to 7 | 1.2 to 5 | 2.25 to 4 |
| Color component | 0.25 to 5 | 0.8 to 3 | 1.0 to 1.8 |
| Herbal binder | 0.5 to 5 | 0.8 to 3 | 0.1 to 2 |

Actual examples of the snuff composition have been prepared using the above general formulas, as set forth below:

6

## EXAMPLE II

A snuff composition was prepared as a substitute nicotine-free herbal composition in accordance with the following formula:

### TABLE VII

| Ingredient | Weight in Grams | % By Weight |
|---|---|---|
| Cut and sifted Red Clover | 150.9 | 32.7 |
| Casing | | |
| Barbados Molasses | 197.42 | 42.7 |
| Glycerine | 15.35 | 3.3 |
| Salt | 20.76 | 4.5 |
| Sodium Bicarbonate | 20.11 | 4.4 |
| Water | 16.52 | 3.6 |
| Flavorant | | |
| Cayenne | 7.4 | 1.6 |
| Ammonium Chloride | 9.91 | 2.1 |
| Combination flavorings | 3.31 | .7 |
| Colorant | | |
| Caramel | 5.01 | 1.1 |
| Herbal binder | | |
| Powdered marshmallow root | 4.2 | .9 |
| Acachia gum powder | 1.24 | 0.3 |
| Distributor | | |
| Powdered red clover | 10.0 | 2.2 |

First of all, certain of the components were premixed with the red clover powder as an interface for effective distribution with the herbal red clover cut and sifted. In particular, approximately one-half of the total amount of cayenne, the powdered marshmallow root, and powdered acachia gum were blended with the powdered red clover and then the premix was distributed evenly in the cut and sifted red clover by blending.

In order to prepare the casing, the molasses were warmed to approximately 100 to 120"F. prior to mixing and then the distilled water and glycerine were thoroughly mixed therewith by blending for approximately two minutes. The salt, sodium bicarbonate and ammonium chloride were then grounded and sifted and immediately introduced into the liquid casing mixture whereupon the casing mixture turned from a very dark brown to a lighter chocolate color and a foamy consistency. This is a heavy liquid which was then dispensed into a ribbon blender, i.e., a tumbler with a ribbon blade for blending in which the red clover was being tumbled and continued for approximately five minutes.

Once this material was sufficiently combined with the red clover, flavoring, e.g., the combined flavoring material of choice along with the balance of the cayenne which had been premixed, was sprayed on the admixed red clover for about two minutes. The entire combination was then bulked for about 4 days before packaging.

The snuff which resulted from the above procedure was a thoroughly mixed fine-textured product which closely approximates the snuff prepared from normal tobacco leaves.

## EXAMPLE III

Another snuff composition was prepared as in the procedure forth above. but using the following formulation.

7

| Ingredient | Weight in Grams | % By Weight |
|---|---|---|
| Cut and sifted Red Clover | 147.9 | 30.2 |
| Casing | | |
|     Barbados Molasses | 197.42 | 40.4 |
|     Glycerine | 15.35 | 3.1 |
|     Water | 16.52 | 3.4 |
|     Salt | 20.76 | 4.2 |
|     Sodium Bicarbonate | 20.11 | 4.1 |
|     Water | 16.52 | 3.4 |
| Flavorant | | |
|     Cayenne | 6.5 | 1.3 |
|     Ammonium Chloride | 9.91 | 2.0 |
|     Combination flavorings | 17.67 | 3.6 |
| Colorant | | |
|     Caramel | 5.01 | 1.0 |
| Herbal binder | | |
|     Powdered marshmallow root | 4.2 | .9 |
|     Acachia gum powder | 1.24 | 0.3 |
| Distributor | | |
|     Powdered red clover | 10.0 | 2.0 |

The resulting produce was a even-textured light snuff composition which provided good coherency and binding as well as excellent flavor during the use.

## HEALTH COMPOSITION EXAMPLES

### I. HERBAL HEALTH CHEW COMPOSITION

Another embodiment of present invention is directed to tobacco-free or substantially tobacco-free herbal snuff composition and chew composition including a blend of different herbs and a blend of different "casing" materials. The term "casing" as used with regard to the health composition is as set forth below:

The herbs in the herbal blend, all being commercially available, are as follows:

### A. Red Clover (Trifolium Pratense)

Red Clover is essentially the flower, the flower being beneficial in cleansing the digestive system when the snuff is swallowed. Commercial red clover normally includes a few leaves which give no adverse side reaction.

Red Clover can be harvested by cutting the plant a few inches from the top and drying the cuttings under ambient conditions. The dried material is then sifted by a gravitational separator for reseparating the stems and florets. The florets separated can be ground to a fine powder. Red Clover may be added either as a powder or as a floret, also known as red clover, cut and sifted (C/S). The red clover C/S can be included in one form of the inventive composition (the health chew composition) in an amount ranging from about 40-55%, 46% being preferred in regular cut. In this embodiment, when the C/S clover is regular cut, the powdered red clover is added in an amount ranging from 20-35%, 27% being preferred.

The red clover is believed to be a blood purifier and has mild alternative properties. It includes vitamin B-complex, vitamins C, F and P and is valued for high mineral content, being rich in magnesium, calcium, and copper.

## B. Dandelion Root (Taraxacum Officinalis)

The part of the dandelion utilized herein is the root thereof which is roasted and then ground to a fine powder. The root aids in preserving the herbal snuff composition. It is also known as a source of vitamins A, B1, C and G. Dandelion Root may be included in the composition in a range from 0.05% to .07%, 0.05% being preferred, the percent based upon dry ingredients.

Dandelion Root also includes vitamin E, and is rich in calcium, potassium, and sodium. It contains minute amounts of phosphorus, iron, nickel, cobalt, thin, copper and zinc.

## C. Echinacea (Echinacea Angustifolia)

The granulated root of the echinacea plant is the part of the plant utilized in the composition for preventing molding and thus preserving the composition against formation of bacteria known as salmonella. It also can be employed both internally and externally as a medicinal preparation. Echinacea is included in a range of 0.02% to 0.04% of dry ingredients, 0.03% being preferred.

Echinacea is a blood purifier and a natural antibiotic. It contains vitamins A, E and C plus iron, iodine, copper, sulphur and potassium. It is considered to help remove toxins from the blood.

## D. Slippery Elm (Ulmus Fulva)

The inner bark of the slippery elm ground to a light, greyish fawn-colored powder is the part of the plant constituting an ingredient of the snuff composition and is known to be as fully nutritious as oatmeal. Slippery Elm is utilized in a range from about 0.01% to 0.02% of dry ingredients, 0.01% being preferred.

Slippery Elm is very demulcent, emollient, and nutritive. It is very mucillaginous, making it advantageous to maintain the consistency of the chew. It contains vitamins E, F, K and P, along with several minerals. It helps assist the activity of the adrenal glands and boosts the output of certain hormone which helps send a stream of blood building substances throughout the system.

All of the selected herbs utilized herein in the formation of the herbal snuff composition are certified by the Federal Drug Administration as safe and free of molds and acceptable for marketability.

Principal Casing Ingredients

The casing materials preferably include:

1. Sea Salt, extremely fine ground, functions as a preservative and induces salivation. It is utilized in a range of from up to 0.05-0.09% of dry ingredients with 0.08% being preferred.

2. Jamaican ginger (Zingiberis Officinale), derived from the root of the plant in powdered form, functions to improve the bite of the herbal snuff and is employed in amounts ranging from 0.01-0.04% of dry ingredients with 0.02% being preferred. Ginger contains vitamins A, C and B-complex with several minerals and is good for the respiratory system. The ginger may also be Chinese ginger.

3. Rose hips (Rosa Species) in powdered form enhances the flavor of the snuff, and also is a excellent source of vitamin C. Rose hips can be included in a range of from 0.01-0.04% of dry ingredients with 0.02% being preferred.

4. Cayenne (Capsicum Frutescens) in the powdered state imparts a bite of firey sensation in the mouth which continues for a long time. Cayenne is included in a range of 0.01-0.05% of dry ingredients with 0.03% being preferred. Cayenne increases the efficacy of all other herbs, acting as a catalyst to carry them into the body. It contains vitamins A, C, iron and calcium with some trace minerals and is rich in potassium. Cayenne has different BTU ratings. In the blend, 40,000 BTU is considered preferable.

5. Molasses and unsulfurized molasses is essentially a binder and also functions to prevent drying out of the herbal composition and for imparting flavor thereto. Blackstrap makes up 0.70-0.75% of moist ingredients, with 0.71% preferable. Barbados unsulfured molasses makes up 0.20-.0.26% of moist ingredients, with 0.24% preferable.

6. Various mint oils can be included in a range of about 2 to 6 drops per 22 grams wt. dry mix. It imparts a strong and aromatic aroma and fragrance to the herbal snuff compositions and also imparts flavoring thereto. Examples of mint oils are spearmint (mentha spicata), wintergreen, peppermint (mentha piperita), and clove.

7. Distilled water is included in an amount sufficient to aid in blending the herbs and casing.

Ancillary Casino Ingredients

Ancillary casing ingredients in addition to the principal casing ingredients may be included in the herbal snuff or chewing composition as follows:

(a) Fruit flavors, which also impart varying coloring, as disclosed in U.S. Patent No. 3,112,754, herein incorporated by reference thereto, particularly honey, vanillin, mints, and other of the above-mentioned flavors, e.g., mountain mint and stone mint, and essential oils;

(b) Gums can be included, in an amount of from about .005-009% dry ingredients according to the blend, such gums including tragacanth, gum arabic, guar gum, gum acacia, gum karaya, and other suitable gums;

(c) Roots, such as marshmallow root, can also be included;

(d) Vegetable leaves in variable amounts according to the desired consistency can be included.

especially, beet (Patchouli), mullein (Verbascum Thapsus), white (Trifolium Repeus) and sweet clover (Melilotus Officinalis), papaya (Carica Papaya), red raspberry (Rubus Idaeus), plantain (Plantago Major). licorice (Glycyrrhiza Glabra), ginseng (Parrax Shin-Seng or Parrax Quinquefolium), anise, licorice, and clove (Caryophyelus Aromatious);

(e) Bacteriocides, for example, phostoxine which is an FDA approved spray material, can also be used;

(f) Clove powder (Eugenia Caryophyllata) can be included and can be an important part of the product combination. It contains one of the most powerful germicidal agents known in herbs (Eugenol) and is compared favorably as being more powerful than mercury bichloride. It is therefore useful in the preservation of the product. Other qualities contribute to the taste and bite found in the product 0.01-0.02% of the dry ingredients with 0.01% preferred.

The casing material for the health product is used in varying amounts as a means of binding the mixture together; providing the desired amount of moisture; imparting certain beneficial digestive qualities; and in imparting the particular desired flavor of the product.

Certain other ingredients such as niacin, rutin, and other additional bioflavonoids may be incorporated into the composition of the material to enhance the nutritional value and quality of the product. These ingredients along with others in the product induce the production of saliva, and are absorbed quickly and directly through the mucous membranes in the mouth; from thence into the human circulatory system, and eventually to be utilized in a beneficial manner in the body.

These ingredients such as niacin and rutin may be incorporated in the composition by adding to the casing materials niacin (Nicotinic Acid) which is not to be confused with the nicotine in tobacco. It, along with rutin may be absorbed by the soft tissue in the mouth, and, ultimately, the human circulatory system. The absorbed niacin causes a dilation of the blood vessels with the resultant relaxing of tension and production of a satisfied feeling. Any of these additional items used would make up only a minute percent by weight of the final product.

The casing material may be used in higher concentrations in certain of the products, namely processing of leafy chews.

## Process Of Treating Leaves And Roots

In the processing of leaves and roots of the various plants conventional drying techniques, such as are used in tobacco drying and curing, are followed. Leaves are dried and cured over various lengths of time. The color of the cured leaves is approximately that of tobacco. The drying/dehydration process may be done with an artificial low-heat process or dried/cured naturally.

Certain of the leaves may go through an induced or natural sweating, fermenting and aging under conventional tobacco methods and conditions.

## The Cutting/Shredding/Powdering Operation

All flowers/leaves/dried roots go through different and varying methods of preparing the proper consistency and content for the product.

Through special sifting and cutting methods, the undesirable parts of the plant are discarded such as coarse stems, veins, etc. These various processes may be carried out or eliminated as desired, or as called for in the preparation of the raw material for the particular product application.

Part of the process is in the mixing together, in the proper proportions, the various leaves in each particular product. In the snuff health mixture, the leaves/roots make up approximately 40% of the total weight of the mixture. The remaining weight is found in the oils/extracts/liquids used.

Other ingredients such as moisturizers/glycerine, and humectants may be utilized prior to, and during this process.

## Final Processing/Packaging Prep

The final processing preparation must be done carefully to insure the kind of consistency/flavor and bite essential to a fine product.

Step 1: This step concerns the blending of certain of the powdered ingredients prior to bulk blending. The process for the manufacture of the finished composition begins with the mixing and blending of certain demulcent/mucilaginous/flavoring herbs in their dry powdered form; namely the powdered herbs in the snuff health formula, or any additional herbs incorporated into an alternative flavor/consistency formula or combination. These are mixed in a sealed, stainless steel tumble blender for a minimum of fifteen minutes.

Step 2: The product base ingredients, or major dry ingredients are introduced into a large stainless steel blender in preparation for the blending process. All dry ingredients are subjected to powerful magnetic cleaning rolls to ensure that no inert metals go into the finished product. This process is taken care of as the dry ingredients are urged into the blending unit. The concentrate blend described in Step 1 is then spread over the surface of this base and major ingredient and blended for ten to fifteen minutes.

Step 3: The casing ingredients, or liquid ingredients are mixed and blended at high speed for five minutes in a special blender. They are then sprayed directly on the upper surface of the dry ingredients by using special pressure equipment. All the binder/casing ingredients, which also serve the purpose of flavoring/preservation/bite and nutritive qualities, are all used for that particular blend. This usually requires thirty to forty minutes of time. Thorough mixing is essential. but careful controls must be maintained to prevent any balling or caking of the ingredients.

Step 4: The completed blend is then emptied into containers. The material is fed through a specially built stainless steel chopper/beater which ensures proper granulation and consistency of the product.

The completed product is sealed for a storage/curing time of at least seventy-two hours before beginning the packing process. Certain blends must be held longer for more thorough curing and aging. During this time of aging, the casing materials homogenize themselves into the dry ingredients to a proper consistency for packaging. The mix is kept in carefully controlled humidity and in cool temperatures at all times during the processing.

Product preparation may also include certain regrinding/chopping procedures in preparing either the health snuff or even if chewing tobacco compositions are contemplated for production.

While the emphasis above is for preparing a tobaccoless herbal snuff and chew composition, negligible amounts of tobacco containing leaves may be included in the tobaccoless herbal snuff and chew composition with miniscule adverse affects on the quality of the tobaccoless herbal snuff exhibiting the properties herein described and a product with mild but satisfying nicotine content.

## EXAMPLES OF HERBAL HEALTH SNUFF COMPOSITION

1.

| Herbs | Grams |
|---|---|
| Red Clover | 10 |
| Dandelion | 1.3 |
| Echinacea | 0.6 |
| Slippery Elm Bark | 0.2 |
| Casing | |
| Sea Salt | 1.3 |
| Jamaican Ginger | 0.7 |
| Rose hips | 0.4 |
| Cayenne | 1.2 |
| Molasses | 15.0 |
| Unsulfurized Molasses | 0.5 |
| Distilled water | 1.0 |
| Mint Oils | Drops |
| Spearmint | 1.0 |
| Wintergreen | 1.0 |
| Clove | 1.0 |

This composition (1.), in the opinion of a test panel, exhibited superior results compared to other compositions below.

2. A health snuff composition was prepared combining all of the ingredients and in the same amounts as in Example 1., but excluding rose hips, slippery elm, spearmint and clove and yet obtained a blend exhibiting good results as indicated by a panel test sampling the resulting blend.

3. Favorable results were still obtained by exclusion of one of Jamaican ginger or cayenne from Example 2. and substituting spearmint for wintergreen.

It is also contemplated to provide a leafy chew product as a substitute for clewing tobacco and/or nicotine-containing chewing products by use of an herbal composition.

In processing the leafy form of chew, leaves may be submerged in vats, for varying lengths of time; suspended in certain of the liquid materials fro purposes of flavor/curing properties.

The materials may be mixed together, heated, and compressed then into a suitable plug-type or twist chewing product, or soft-shredded chew material.

### 4. SMOKEY MOUNTAIN REGULAR CUT CHEW COMPOSITION FORMULA

| Ingredient List | Percent of Weight |
|---|---|
| Red Clover C/S | 46% |
| Red Clover Pwd. | 27% |
| Sea Salt E.F. | 06% |
| Dandelion Rt. Rst. | 05% |
| Ginger Rt. Pwd. | 03% |
| Echinacea Augustifolia | 03% |
| Rose Hips Pwd. | 02% |
| Marshmallow Rt. | 01% |
| Slippery Elm | 01% |
| Clove Powder | 01% |
| Cayenne | 05% |

**Casing/Flavoring Materials**

| | |
|---|---|
| Blackstrap Molasses | 71% |
| Barbados Unsulf. Mol. | 24% |
| Distilled Water | 05% |
| Spearmint Oil | |
| Wintergreen Oil | |
| Clove Oil | |

(Oil contribute an insignificant percent of weight)

5. Smokey Mountain Wintergreen Formula

This formula/combination is essentially the same as 4 with the exception of added wintergreen oil as flavoring. The same is true of other flavored blends utilizing fruit flavors.

Ancillary casing ingredients may be added to the blend in the range proportionate to the particular consistency/content/product being produced.

In utilization of water insoluble plant and oil extracts, molasses (water soluble) and the ingredients must be homogenized together by a high speed blending machine. The liquids are sprayed under optimum pressure by use of gas cylinders to properly dispense the liquid into the dry mix. This is specially constructed equipment.

This chewing composition includes leaves of dandelion, papaya, sorrel, sunflower, calendula, nasturtium and mallow, which are subjected to conventional processing conditions including aging, curing, drying, and pressing. They can then be processed under conditions similar to those conditions utilized for tobacco leaves by drying in the whole form, utilizing natural aging and curing by air currents and artificial heat and other suitable conventional means, and by sweating and fermentation under suitable conventional tobacco processing conditions in order fully develop the desirable properties of the vegetable materials. The processed/dried leaves and/or fibers are then stored until ready for conversion into the final form.

The ultimate commercial chewing composition can bake one of two basic forms; one without any tobacco/nicotine in it, the other with approximately 4% to 5% tobacco leaves.

This leafy composition contains approximately 0.1% to 2% of niacin which produces a "niacin-rush", so-called for the euphoria experience resulting by use it, and for decreasing the capillary fragility where present.

Various flavoring agents. sweeteners, dyes, aromatics and humectants are applied to the leaves by special spraying methods. Additional distilled water may be added if necessary to obtain the right consistency and later partially or completely removed as desired. This composition may be formed into plugs by use of heat and pressure, or left in the looseleaf form.

### EXAMPLES OF LEAFY COMPOSITIONS
### EXAMPLE #6

| Constituents: | % of Weight |
|---|---|
| Dandelion leaves | 49% of mixture |
| Papaya leaves | 20% of mixture |
| Sorrel leaves | 05% of mixture |
| Calendula leaves | 05% of mixture |
| Casing Ingredients: | |
| Niacin | 3% of mixture |
| Glycerine | 5% of mixture |
| Chinese Ginger Root Pwd. | 5% of mixture |
| Clover powder | 5% of mixture |
| Althea Root Pwd. | 1% of mixture |
| Roasted Dandelion Rt. Pwd. | 2% of mixture |
| Liquid Ingredients: | |
| Blackstrap molasses | 71% of mixture |
| Barbados Unsulf. Mol. | 20% of mixture |
| Water | 09% of mixture |

In Example 6, the leaves of the dandelion, and papaya, sorrel, and calendula, are dried and then placed in a special blender and tumbled at low speed. The mallow (althea) root, and dandelion root powder are then added as a part of the casing mixture. The liquids are blended at high speeds to homogenize them, and them are sprayed by a high pressure sprayer which is an integral part of the blender.

The admixture is then placed in container for allowing full absorption of the liquid ingredients. This time lapse is usually four or five days in length. Examination then shows a product very similar in appearance to tobacco.

13

EXAMPLE #7

| Constituents: | % of Weight |
| --- | --- |
| Dandelion leaves | 65% of mixture |
| Papaya leaves | 12% of mixture |
| The casing materials for the above: | |
| Clove Powder | 2% of mixture |
| Althea Root Pwd. | 1% of mixture |
| Slippery Elm Pwd. | 1% of mixture |
| Roasted Dandelion Rt. Pwd. | 4% of mixture |
| Niacin | 2% of mixture |
| Rutin | 5% of mixture |
| Ginger Root Pwd. | 3% of mixture |
| Cayenne Powder | 5% of mixture |
| Minute flavoring ingredients include: | |
| Clove oil | |
| Vanillin | |
| Essential oils | |

The leaves may be dipped in various commercial mixtures or the shredded leaves may be sprayed with casing mixtures already described above relating to herbal chews. These additive materials enhance the quality, flavor, and aroma, while at the same time leaving a very low residual and even negligible amount of nitrogen and sulphur compounds, or other essential harmful, or unwanted ingredients.

Shredding, cutting chopping steps are used as desired, or as called for by the particular product consistency desired.

The amounts of ingredients above disclosed have a tolerance variable of 1% to 2%.

EXAMPLE #8

This composition is prepared in essentially the same manner as set forth in each of the other leafy chew examples. The processing methods of the leafy herbs is completed in the same manner as aforementioned. In this composition it is to be noted that the leaf ingredients previously found in one category may be listed, with other dry ingredients in another category, and the moisteners in still another. As before, the flavoring oils lend no appreciable weight to the product and are not included in percentages of weight.

14

| Leaf Ingredients: | % of Weight |
|---|---|
| Dandelion | |
| (Taraxacum Officinale) | 76 |

| Dry powders | |
|---|---|
| Sea salt extra fine | 6 |
| Cayenne | 4 |
| Dandelion Rt. Roasted | 4 |
| Marshmallow root | 1 |
| Clove bud | 2 |
| Echinacea Augustifolia | 2 |
| Kola nut | 2 |
| Slippery Elm | 1 |
| Rose Hips | 1 |
| Ginger | 3 |

| Liquid Ingredients: | % of Liq. Wgt. |
|---|---|
| Blackstrap molasses | 71 |
| Barbados Unsulf. Molasses | 24 |
| Water | 0 |

Essential Flavoring Oils:

Peppermint oil

Wintergreen oil

Almond oil

Fruit oils

Clove oil

In the final processing of this composition, the molasses, water, and flavoring oils are blended with one half of the following casing ingredients:

Marshmallow Root Powder
Slippery Elm Powder
Ginger Root Powder
Rose Hips Powder
Kola Nut Powder

The blending/homogenizing process is done in special high speed blender prior to application by high pressure spray equipment.

The resultant mixture, one completed, is then transferred to special containers and sealed for four days to permit a total absorption of the moistening and flavoring ingredients, after which it is then packaged for marketing.

Scientific analysis has shown that every herb contains literally hundreds of biochemcial constituents that may have an effect on the body. These constituents lend themselves to certain physiological effects, of properties, and may be classified under many terms to describe their effects, which may be placed in three general categories;

1. Eliminating and detoxifying

15

2. Maintenance

3. Building and toning

The herbs used in the above compositions all fall into one or more of the many categories used to denote effects such as antiseptic, demulcent, diuretics, emollient, stimulants, tonics, rubefacients, sialagogues, hemostatics, and vulneraries.

The specific terms are used only to describe the ways in which herbs are generally used, and do not reflect any healing claims of the above compositions.

In all the composition, stress tests have confirmed the unique ability of the product to improve with age.

## Claims

1. A chewing or snuff composition comprising a nicotine-free herb capable of being encased and capable of being processed to a texture which is non-injurious to the surface of the oral cavity, and a casing material for combining with said herb which maintains said herb in a moist coherent cud in the mouth during use.

2. The chewing composition of Claim 1 wherein said herb is hydrophilic and wherein said casing is adsorptive to said herb.

3. The chewing composition of Claim 1 wherein said herb is selected from the group consisting of clover, dandelion, papaya, dock or sorrel, sunflower, calendula, nasturtium, mallow, chicory, corn silk, and mixtures thereof.

4. The composition of Claim 2 which is a chewing composition and wherein said herb is a mixture of dandelion and dock or sorrel.

5. The composition of Claim 2 which is a snuff composition and wherein said herb is clover.

6. The composition of Claim 1 wherein said casing comprises a preservative, a binder, and a humectant.

7. The chewing composition of Claim 6 wherein said preservative is selected from the group consisting of a salt, powdered dandelion root, echinacea, clove powder, and mixtures thereof, wherein said binder is selected from a group consisting of molasses, corn syrup, hydrogenated starch hydrolysates, and mixtures thereof, and wherein said humectant is selected from the group consisting of glycerine, sorbitol, invert sugar, and other moisture-maintaining materials.

8. The composition of Claim 1 which further comprises one of a flavorant, a coloring agent, and an additional non-casing herbal binder component.

9. The composition of Claim 8 wherein said flavor component is selected from the group consisting of natural and artificial sweeteners, flavoring agents, spices, fruit flavors, and mixtures thereof, wherein said color component is selected from the group consisting of carmel and other food grade coloring agents, and wherein said herbal binder component comprises an ingredient selected from the group consisting of gums, slippery elm, mallow, and mixtures thereof.

10. The chewing composition of Claim 1 which further comprises a bio-effecting agent selected from the group consisting of mineral supplements, analgesics, antipyretics, antiarrhythmics, ion exchange resins, appetite suppressants, vitamins, anti-inflammatory substances, coronary dilators, cerebral dilators, peripheral vasodilators, anti-infectives, psychotropics, antimanics, stimulants, antihistamines, laxatives, decongestants, gastro-intestinal sedatives, antidiarrheal preparations, anti-anginal drugs, vasodilators, anti-hypertensive drugs, vasoconstrictors and migrane treatments, antibiotics, tranquilizers, antipsychotics, antitumor drugs, anticoagulants and antithrombotic drugs, hypnotics, sedatives, anti-emetics, anti-nauseants, anticonvulsants, neuromuscular drugs, hyper and hypoglycaemic agents, thyroid and antithyroid preparations, diuretics, antispasmodics, uterine relaxants, nutritional additives, antiobesity drugs, anabolic drugs, erythropoietic drugs, antiasthmatics, expectorants, cough suppressants, mucolytics, anti-uricemic drugs and mixtures thereof.

11. The composition of Claim 8 which is a chewing composition wherein said herb component is present in the composition of the final product in an amount of from about 40% to about 60% by weight, said casing component is present in an amount of from about 8% to about 35% by weight, said flavor component is present in an amount from about 4% to about 26% by weight, and said color component is present in an amount of from about 0.25% to about 5% by weight.

12. The composition of Claim 11 wherein said herb component is present in an amount of about 45% to about 55% by weight, said casing component is present in an amount of from about 15% to about 28% by weight, said flavor component is present in an amount of from about 8% to from about 20% by weight, and said color component is present in an amount of about 0.8% to about 3.0% by weight.

13. The composition of Claim 8 which is a snuff composition wherein said herb component is present in the final product in an amount of from about 25% to about 45% by weight, and said casing component is present in an amount of from about 35% to about 65% by weight, and wherein, optionally, said flavor component is present in an amount of from about 0.25% to about 7% by weight, said color component is present in an amount of from about 0.25% to about 5% by weight, and said additional binder component is present in an amount of from about 0.5% to about 5% by weight.

14. The snuff composition of Claim 13 wherein said herb component is present in an amount of from about 30% to about 40%, and said casing component is present in an amount of from about 40% to about 60%, said flavor component is present in an amount of from about 1.2% to about 5% by weight, said color component is present in an amount of from about 0.8% to about 3% by weight, and said additional binder component is present in an amount of from about 0.8% to about 3% by weight.

15. The snuff composition of Claim 14 wherein said herb component is present in an amount of from about 32% to about 37% by weight, and said casing component is present in an amount of from about 45% to about 55% by weight, said flavor component is present in an amount of from about 2.5% to about 4% by weight, said color component is present in an amount of from about 1.0% to about 1.8% by weight, and said additional binder component is present in an amount of about from 0.1% to about 2.0% by weight.

16. A process for preparing a tobaccoless chewing composition comprising providing a substantially leafy medium capable of being encased and capable of being processed to a texture which is not injurious to the surface of the oral cavity, moistening said herbal medium with a casing material which maintains said herb medium in a moist coherent cud during chewing, steaming said encased herbal medium, and dehydrating said steamed, moistened herbal medium until the moisture level is appropriate for providing a chewing composition, preferably about 19% to about 21%.

17. The process of Claim 16 wherein said herbal medium is aged after said steaming step in order to darken said moistened herbal medium to the desired shade, and which further comprises adding flavoring before and during dehydrating said leafy herbal medium, wherein said leafy medium is cut to the desired consistency after moistening, preferably to about 2 inches in length.

18. A process for preparing a tobaccoless herbal snuff composition comprising providing a herbal medium nicotine-free medium capable of being encased and capable of being processed to a snuff consistency which is non-injurious to the surface of the oral cavity, combining with said herbal medium a casing material which maintains said medium in a moist coherent cud in the mouth during use.

19. The process of Claim 18 which further comprises premixing said casing material with a distributor for interfacing with said milled herbal medium to provide a consistent mixture throughout said resulting snuff composition.

20. A chewing and/or snuff composition comprising a red clover herb and an effective amount of a casing material for maintaining said herb in a moist coherent state, and, optionally, a natural herb, such as dandelion, capable of functioning as a preservative.

21. A chewing and snuff composition as recited in Claim 20 wherein said composition further includes additional natural herbs, at least one being slippery elm bark, and including dandelion, and wherein said red clover is the major herbal ingredient therein.

22. A chewing and snuff composition as recited in Claim 20 wherein the casing material includes a material in an amount capable of inducing salivation, said material comprising sea salt further functioning as a preservative.

23. A chewing and snuff composition as recited in Claim 26 further including natural substances in an amount sufficient to improve the bite of the herbal snuff, the biting substance is selected from the group consisting of Jamaican ginger, Chinese ginger, and cayenne and mixtures thereof.

24. A chewing and snuff composition as recited in Claim 20 further including an ingredient in an amount sufficient to prevent substantial drying out of the composition with concurrent flavoring thereto, said ingredient is selected from the group consisting of molasses and unsulfurized molasses and mixtures thereof.

25. A composition as recited in Claim 20 further including an effective amount of a mint leaf in an amount sufficient for imparting a strong and aromatic or fragrance to said composition.

26. A composition as recited in Claim 25 further including an effective amount of a mint leaf selected from the group consisting of spearmint, wintergreen and clove and mixtures thereof for imparting a strong and aromatic or fragrance to said composition.

27. A herbal composition comprising herbs and casing material wherein said herbs comprise:

| Red Clover | 10 gms. |
|---|---|
| Dandelion | 1.3 gms. |
| Echinacea | 0.6 gms. |
| Slippery Elm Bark | 0.2 gms. |

and wherein said casing material comprises:

| Sea Salt | 1.3 gms. |
|---|---|
| Jamaican Ginger | 0.7 gms. |
| Rose hips | 0.4 gms. |
| Cayenne | 1.2 gms. |
| Molasses | 15.0 gms. |
| Unsulfurized Molasses | 0.5 gms. |
| Distilled water | 1.0 gms. |

and Mint Oils

| Spearmint | 1.0 drops |
|---|---|
| Wintergreen | 1.0 drops |
| Clove | 1.0 drops |

28. A composition as recited in Claim 22 further including ancillary casing materials or additives selected from the group consisting of fruit flavors, gums, vegetable leaves, vitamins, bacteriocides and mixtures thereof.

29. A snuff composition as recited in Claim 20 wherein the herbs consist essentially of red clover, dandelion, and slippery elm bark, and wherein said casing material consists essentially of sea salt, Jamaican ginger and molasses.

30. A chewing composition comprising dandelion leaves and an effective amount of a casing material for maintaining said dandelion in a moist coherent state.

31. A composition as recited in Claim 30 including papaya leaves, and further including a leaf selected from the group of sorrel and calendula leaves and mixtures thereof.

32. A composition as recited in Claim 30 wherein said casing material includes a substance selected from the group consisting of niacin, glycerine, Chinese ginger root powder, clove powder, althea root powder and roasted root powder, and mixtures thereof.

33. A chewing and/or snuff composition that can be maintained as a moist coherent cud in the mouth during use and that is is in the form of strands or other pieces that can form the cud in the mouth, characterised in that the composition is substantially free of nicotine and comprises at least 25% by weight nicotine-free herbal component and up to 65% by weight casing material comprising binder, humectant and preservative.